# EUROPÄISCHE PATENTSCHRIFT

(11) **EP 3 333 118 B1**
(45) Veröffentlichungstag und Bekanntmachung des Hinweises auf die Patenterteilung: **11.01.2023**
(21) Anmeldenummer: 17202664.3
(22) Anmeldetag: 21.11.2017
(51) Int. Cl.: B66F 9/075, B60R 11/02, B60R 11/00

(54) **FLURFÖRDERZEUG MIT EINEM FAHRERSCHUTZDACH**
INDUSTRIAL TRUCK WITH A DRIVER PROTECTION ROOF
CHARIOT DE MANUTENTION DOTÉ D'UN PROTÈGE-CONDUCTEUR

(30) Priorität: 08.12.2016 DE 102016123807
(43) Veröffentlichungstag der Anmeldung: 13.06.2018
(73) Patentinhaber: STILL GmbH, 22113 Hamburg (DE)
(72) Erfinder: KOHL, Tobias, 22525 Hamburg (DE)
(74) Vertreter: Patentship Patentanwaltgesellschaft

(56) Entgegenhaltungen:
- DE-A1-102010 048 096
- DE-A1-102011 016 840
- DE-A1-102011 018 802
- DE-A1-102015 105 689
- DE-U1-202016 005 501

## Beschreibung

Die Erfindung betrifft ein Flurförderzeug mit einem Fahrerschutzdach und einem innerhalb des Fahrerschutzdaches angeordneten Fahrerarbeitsplatz für eine Bedienperson des Flurförderzeugs und mindestens einer im Fahrerarbeitsplatz angeordneten Komponente, wobei im Frontbereich des Fahrerarbeitsplatzes eine Nutprofilschiene angeordnet ist, die mit zumindest einer Nut versehen ist, wobei die Komponente mittels eines in die Nut eingesetzten Befestigungsmittels, insbesondere eines Nutensteins oder Einrastclips oder Rasthakens, an der Nutprofilschiene befestigt ist.

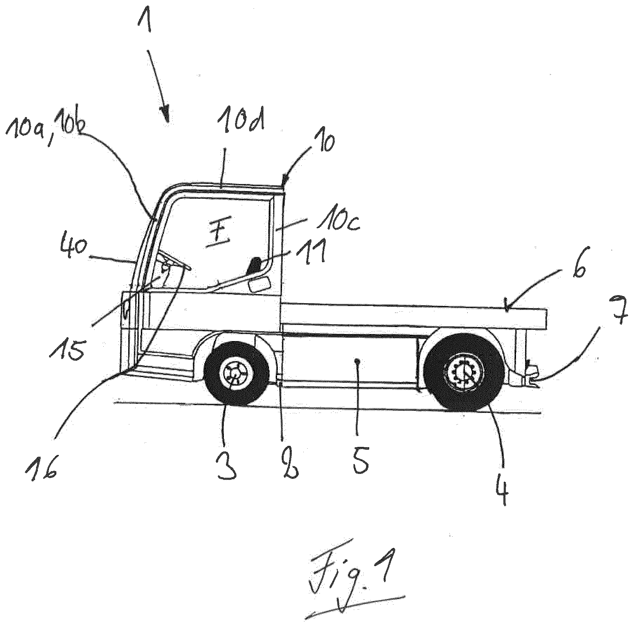

Aus der DE 10 2015 105 689 A1 ist ein als Gegengewichtsgabelstapler ausgebildetes Flurförderzeug gemäß dem Oberbegriff des Anspruchs 1 bekannt, bei dem an einer vorderen, vertikalen Fahrerschutzdachstrebe eine Befestigungsvorrichtung befestigt ist, die aus einer Trägerschiene und einem Halter besteht. Die Trägerschiene weist ein C-förmigen Querschnitt mit einer Nut auf, an der eine elektrische oder elektronische Komponente mittels Nutsteinen befestigt werden kann. Die Trägerschiene ist gemäß der Figur 1 an der linken bzw. rechten vertikalen und vorderen Fahrerschutzdachstrebe vertikal angeordnet.

Aus der DE 10 2011 016 840 A1 ist ein als Kommissionierflurförderzeug ausgebildetes Flurförderzeug mit einem anhebbaren und absenkbaren Fahrerstand bekannt, bei dem ein Bedienpult an der Brüstungswand des anhebbaren Fahrerstands seitlich verschoben werden kann, um beim Kommissionieren das Ablegen von Waren durch eine Bedienperson auf dem Lastaufnahmemittel zu verbessern. Das Bedienpult ist hierzu mittels einer Linearbewegungsführung, die als Kugel- oder Rollenführung ausgebildet ist, an der Brüstungswand des Fahrerstandes verschiebbar angeordnet. Die Linearbewegungsführung umfasst eine Profilschiene, an bzw. auf der ein mit dem Bedienpult versehener Führungsschlitten geführt und längsverschiebbar ist. Die Profilschiene erstreckt sich seitlich bis zu als Kommissionierstützen dienenden Anlehnstützen, die gleichzeitig seitliche Anschläge für den Schlitten bilden.

Bei Flurförderzeugen mit einem innerhalb des Fahrerschutzdaches angeordneten Fahrerarbeitsplatz für eine Bedienperson bildet der Frontbereich des Fahrerarbeitsplatzes ein Armaturenbrett oder ein sogenanntes Cockpit, an dem für die Bedienung des Flurförderzeugs durch die Bedienperson erforderlichen Komponenten angeordnet sind. Bei bekannten Flurförderzeugen ist der Frontbereich des Fahrerarbeitsplatzes derart gestaltet, dass jede Komponente an einem bestimmten und definierten Platz fest angeordnet ist. In der Regel sind die Komponenten in das Armaturenbrett oder eine Cockpitverkleidung integriert. Dadurch können Komponenten nicht oder nur teilweise nachgerüstet werden.

Nachteilig ist hierbei, dass die Bedienperson an die feste Anordnung der Komponenten im Frontbereich des Fahrerarbeitsplatzes gebunden ist und somit an die Struktur gebunden ist, die durch das Armaturenbrett bzw. das Cockpit des Fahrerarbeitsplatzes vorgegeben ist. Die Nachrüstung von weiteren oder zusätzlichen Komponenten ist oft problematisch und aufwändig, da bei bekannten Flurförderzeugen keine definierten Schnittstellen im Fahrerarbeitsplatz vorgesehen sind, an denen Komponenten befestigt und angeordnet werden können. Zudem kann bei bekannten Flurförderzeugen der Fahrerarbeitsplatz nicht individuell an die Wünsche einer Bedienperson hinsichtlich der Anordnung der Komponenten und somit an die Bedienperson angepasst werden. Bei einem integralen Einbau der Komponenten in das Armaturenbrett oder eine Cockpitverkleidung ist zudem nachteilig, dass eine defekte Komponente oft nicht einzeln ausgetauscht werden kann.

Der vorliegenden Erfindung liegt die Aufgabe zugrunde, ein Flurförderzeug der eingangs genannten Gattung zur Verfügung zu stellen, bei dem die Komponenten individuell an die Wünsche einer Bedienperson im Fahrerarbeitsplatz positioniert werden können, Komponenten einfach nachgerüstet und defekte Komponenten einfach ausgetauscht werden können.

Diese Aufgabe wird erfindungsgemäß dadurch gelöst, dass das Flurförderzeug als Schlepper oder als Plattformwagen ausgebildet ist und die Nutprofilschiene im Wesentlichen horizontal angeordnet ist und sich über die gesamte Breite des Fahrerschutzdaches erstreckt. Erfindungsgemäß ist somit bei einem als Schlepper oder Plattformwagen ausgebildeten Flurförderzeug im Frontbereich des Fahrerarbeitsplatzes eine Nutprofilschiene angeordnet, die mit zumindest einer Nut versehen ist. Mit Befestigungsmitteln, insbesondere eines Nutensteins oder eines Einrastclips oder eines Rasthakens, die in die zumindest eine Nut der Nutprofilschiene eingefädelt werden können und in der Nut der Nutprofilschiene hinterschnittig gehalten werden, können an der Nutprofilschiene Komponenten befestigt werden. Eine derartige Nutprofilschiene ermöglicht es, dass entlang der Nut eine Komponente oder mehrere Komponenten beliebig positioniert und befestigt werden können. Die mit der zumindest einen Nut versehen Nutprofilschiene bildet somit eine standardisierte Schnittstelle, an der eine Vielzahl von Komponenten auf einfache Weise befestigt und beliebig positioniert werden können. Die Befestigung von Komponenten in der Nut der Nutprofilschiene mittels entsprechenden Befestigungsmitteln, beispielsweise Nutensteinen, ermöglicht eine einfache Umrüstung und Nachrüstung von Komponenten, eine individuelle an die Wünsche der Bedienperson angepasste Positionierung der Komponenten und somit eine fahrerindividuelle Gestaltung des Fahrerarbeitsplatzes, eine günstige Ergonomie durch eine ergonomisch günstige Anordnung und Anpassung der Komponenten an die jeweilige Bedienperson, einen einfachen Austausch von defekten Komponenten, eine hohe Flexibilität und einen hohen Gestaltungsfreiraum hinsichtlich der Anordnung der Komponenten und eine einfache Umsetzung von Kundenwünschen. Die Nutprofilschiene ist im Wesentlichen horizontal angeordnet und erstreckt sich über die gesamte Breite des Fahrerschutzdaches. Dies ermöglicht es, bei dem Schlepper oder Plattformwagen eine oder mehrere Komponenten über die gesamte Breite des Fahrerschutzdaches im Frontbereich des Fahrerarbeitsplatzes entlang der Nutprofilschiene anzuordnen.

Vorteilhafterweise ist hierbei die Nutprofilschiene zwischen einer linken und einer rechten vertikalen Fahrerschutzdachstrebe angeordnet.

Sofern die Nutprofilschiene an der linken und an der rechten vertikalen Fahrerschutzdachstrebe befestigt ist, kann eine einfache Weise eine Befestigung der Nutprofilschiene im Frontbereich des Fahrerarbeitsplatzes erzielt werden. Die Nutprofilschiene ist hierbei bevorzugt an der linken und an der rechten vertikalen Fahrerschutzdachstrebe mittels Schraubverbindungen oder Schweißverbindungen befestigt.

Die Nutprofilschiene kann gemäß einer vorteilhaften Weiterbildung der Erfindung als Querstrebe des Fahrerschutzdaches und somit als tragende Struktur des Fahrerschutzdaches ausgebildet sein.

Gemäß einer vorteilhaften Weiterbildung der Erfindung ist die Nutprofilschiene unmittelbar oberhalb eines Armaturenbretts angeordnet oder als Bestandteil des Armaturenbretts ausgebildet. Sofern die Nutprofilschiene als Bestandteil des Armaturenbretts ausgebildet ist, ergeben sich weitere Vorteile, da die Nutprofilschiene die Funktion des Armaturenbretts zur Befestigung von Komponenten übernehmen kann, so dass kein eigenständiges Armaturenbrett mehr für die Befestigung und Anordnung von Komponenten im Frontbereich des Fahrerarbeitsplatzes mehr erforderlich ist.

Alternativ oder zusätzlich kann die Nutprofilschiene im Dachbereich des Fahrerschutzdaches angeordnet sein.

Gemäß einer vorteilhaften Weiterbildung der Erfindung ist das Fahrerschutzdach zumindest teilweise aus Nutprofilschienen gebildet. Dies ermöglicht es, auch an anderen Stellen des Fahrerschutzdaches mit entsprechenden Befestigungsmitteln, beispielsweise Nutensteinen, die in die Nuten der das Fahrerschutzdach bildenden Nutprofilschienen eingefädelt werden können, entsprechende Komponenten einfach und hinsichtlich der Positionierung flexibel zu befestigen.

Besondere Vorteile ergeben sich, wenn gemäß einer Weiterbildung der Erfindung die Nutprofilschiene an zumindest zwei Außenseiten jeweils eine Nut aufweist. Dadurch ergeben sich weitere Vorteile hinsichtlich einer flexiblen und variablen Anordnung der Komponenten entlang der Nuten der Nutprofilschiene. Zudem lassen sich mit mehreren Nuten an der Nutprofilschiene eine hohe Anzahl von Komponenten befestigen und positionieren.

Die mindestens eine Komponente ist vorteilhafterweise von einem Halter eines Displays oder einem Halter einer Anzeige- und Bedieneinheit oder einem Halter eines Terminals, beispielsweise eines Logistik-Terminals oder eines Warenmanagementsystems, oder einem Mobiltelefonhalter oder einem Werkzeughalter oder einem Ablagefach oder einer Leselampe oder einer Beleuchtungseinrichtung des Flurförderzeugs, beispielsweise einem Blinker oder einem Arbeitsscheinwerfer, oder einem Haltegriff oder einem Becherhalter oder einem Getränkehalter oder einem Aschenbecher oder einem Spiegel, beispielsweise einem Rückspiegel, oder einer Sonnenblende gebildet.

Gemäß einer vorteilhaften Weiterbildung kann an der Nutprofilschiene eine Innenraumverkleidung des Fahrerarbeitsplatzes befestigt sein, beispielsweise mittels entsprechender Halter, die über in die Nut der Nutprofilschiene eingesetzte Befestigungsmittel, beispielsweise Nutensteine, an der Nutprofilschiene befestigt sind.

Sofern das Fahrerschutzdach mit einer Scheibe versehen ist, beispielsweise einer Frontscheibe, ergeben sich weitere Vorteile, wenn gemäß einer vorteilhaften Weiterbildung der Erfindung an der Nutprofilschiene die Scheibe des Fahrerschutzdaches befestigt ist, beispielsweise mittels entsprechender Halter, die über in die Nut der Nutprofilschiene eingesetzte Befestigungsmittel, beispielsweise Nutensteine, an der Nutprofilschiene befestigt sind.

Weitere Vorteile und Einzelheiten der Erfindung werden anhand der in den schematischen Figuren dargestellten Ausführungsbeispiele näher erläutert. Hierbei zeigt
- Figur 1: ein erfindungsgemäßes als Schlepper oder Plattformwagen ausgebildetes Flurförderzeug in einer Seitenansicht,
- Figur 2: einen Ausschnitt des Frontbereichs des Fahrerarbeitsplatzes der Figur 1 in einer perspektivischen Darstellung,
- Figur 3: einen Ausschnitt der Figur 3 in einer vergrößerten Darstellung,
- Figur 4: die Figur 2 in einer Ansicht von oben,
- Figuren 5a bis 5c: verschiedene Ausführungsformen einer erfindungsgemäßen Nutprofilschiene und
- Figur 6: eine Weiterbildung eines erfindungsgemäßen Flurförderzeugs.

In der Figur 1 ist ein als Schlepper oder Plattformwagen ausgebildetes erfindungsgemäßes Flurförderzeug 1 in einer Seitenansicht dargestellt.

Das Flurförderzeug 1 weist einen Fahrzeugrahmen 2 auf, an dem Vorderräder 3 und Hinterräder 4 angeordnet sind. Zwischen den Vorderrädern 3 und den Hinterrädern 4 ist ein Batteriefach 4 angeordnet, in dem eine elektrische Traktionsbatterie angeordnet ist.

Das Flurförderzeug 1 ist im vorderen, frontseitigen Bereich mit einem Fahrerschutzdach 10 versehen, innerhalb dem ein Fahrerarbeitsplatz F für eine Bedienperson des Flurförderzeugs 1 ausgebildet ist. Der Fahrerarbeitsplatz F kann einen Fahrersitz 11 umfassen, auf dem die Bedienperson während des Betriebs des Flurförderzeugs 1 sitzt.

In Längsrichtung hinter dem Fahrerschutzdach 10 ist das Flurförderzeug mit einer Ladeplattform 6 versehen, auf der Lasten transportiert werden können. Im dargestellten Ausführungsbeispiel ist das Flurförderzeug im hinteren, heckseitigen Bereich mit einer Anhängekupplung 7 versehen, an die Anhänger angekuppelt werden können.

Das Fahrerschutzdach 2 besteht aus einer vorderen linken Fahrerschutzdachstrebe 10a, einer vorderen rechten Fahrerschutzdachstrebe 10b und zumindest einer hinteren Fahrerschutzdachstrebe 10c. Die Fahrerschutzdachstreben 10a, 10b, 10c sind im Wesentlichen vertikal angeordnet und im oberen Dachbereich des Fahrerschutzdaches 10 mittels horizontal verlaufender Längsstreben 10d miteinander verbunden. Zusätzlich sind Querstreben zwischen der linken Fahrerschutzdachstreben 10a und der rechten Fahrerschutzdachstreben 10b vorgesehen.

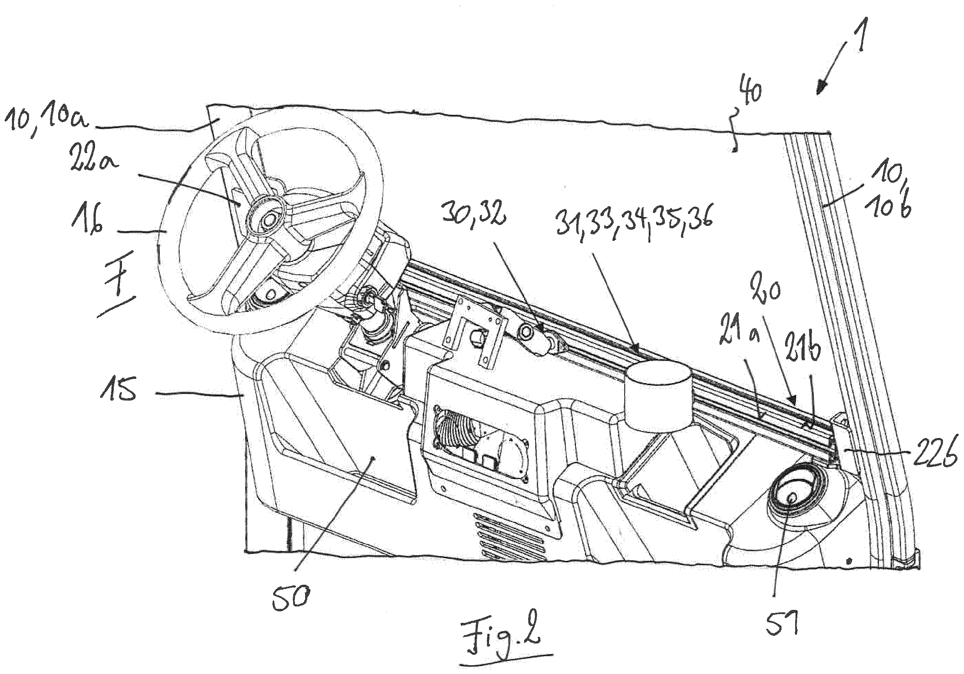

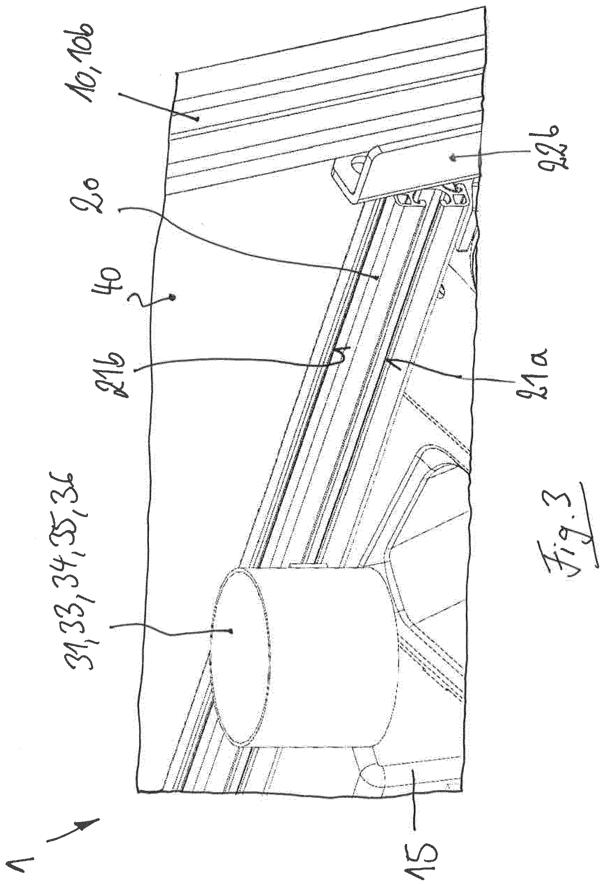

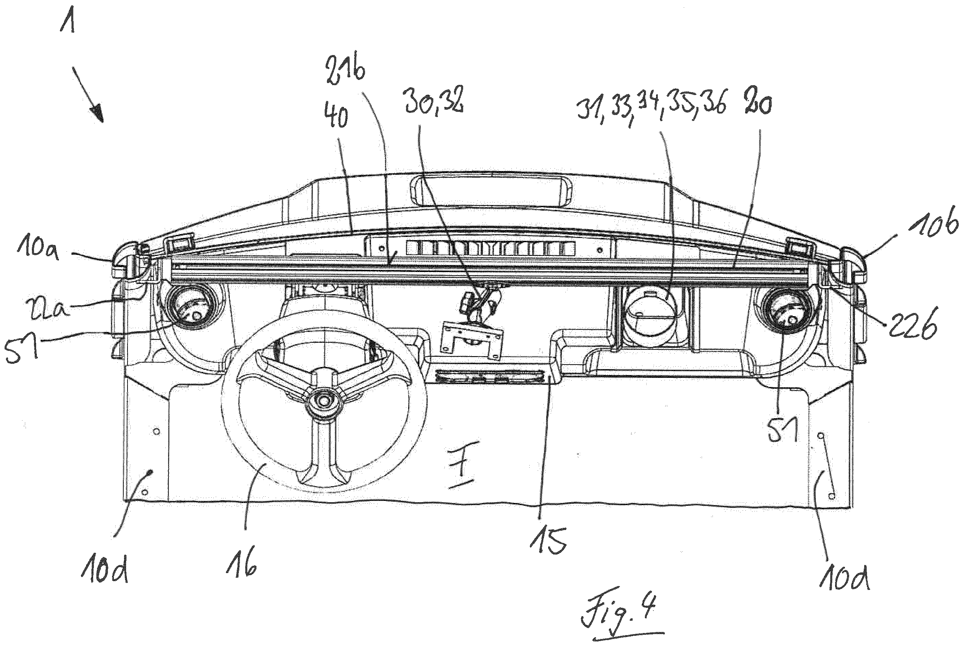

Wie in den Figuren 2 bis 4 näher ersichtlich ist, ist im Frontbereich des Fahrerarbeitsplatzes F innerhalb des Fahrerschutzdaches 10 ein Armaturenbrett 15 und ein Lenkrad 16 angeordnet.

Erfindungsgemäß ist - wie in den Figuren 2 bis 4 näher dargestellt ist - im Fahrerarbeitsplatzes 10 eine Nutprofilschiene 20 angeordnet, die mit zumindest einer Nut 21a, 21b versehen ist. Im Ausführungsbeispiel der Figuren 2 bis 4 ist die Nutprofilschiene 20 im Frontbereich des Fahrerarbeitsplatzes 10 angeordnet, d.h. im Bereich vor einer in normaler Sitzposition auf dem Fahrersitz 11 sitzenden Bedienperson. An der Nutprofilschiene 20 können mittels nicht näher dargestellter Befestigungsmittel, beispielsweise Nutensteine, die in die Nut 21a bzw. die Nut 21b eingefädelt werden können, eine Komponente 30 oder mehrere Komponente 30, 31 befestigt werden. Die Nuten 21a, 21b sind jeweils als Längsnuten ausgebildet, die sich in Längsrichtung der Nutprofilschiene 20 erstrecken. In dem in der Figuren 2 bis 4 dargestellten Ausführungsbeispiel weist die Nutprofilschiene 20 einen viereckigen Querschnitt auf, wobei die Nut 21a an einer dem Innenraum des Fahrerschutzdaches 10 zugewandten Außenseite und die Nut 21b an der die Oberseite bildenden Außenseite der Nutprofilschiene 20 angeordnet ist.

In dem Ausführungsbeispiel der Figuren 2 bis 4 ist die Nutprofilschiene 20 im Wesentlichen horizontal angeordnet über erstreckt sich in Fahrzeugquerrichtung über die gesamte Breite des Fahrerschutzdaches 10 bzw. des Flurförderzeugs 1. Die Nutprofilschiene 20 ist bevorzugt zwischen der vorderen linken Fahrerschutzdachstrebe 10a und der vorderen rechten Fahrerschutzdachstrebe 10b angeordnet. Die Nutprofilschiene 20 ist in dem dargestellten Ausführungsbeispiel der Figuren 2 bis 4 an der vorderen linken Fahrerschutzdachstrebe 10a und an der vorderen rechten Fahrerschutzdachstrebe 10b befestigt. An den stirnseitigen Enden ist hierzu die Nutprofilschiene 20 mit Haltern 22a, 22b versehen bzw. an Haltern 22a, 22b befestigt, wobei der Halter 22a an der linken Fahrerschutzdachstrebe 10a und der Halter 22b an der rechten Fahrerschutzdachstrebe 10b befestigt ist. Die Halter 22a, 22b können hierzu an den Fahrerschutzdachstreben 10a, 10b mittels einer Schraubverbindung oder einer Schweißverbindung befestigt sein.

Im Ausführungsbeispiel der Figuren 2 bis 4 ist die Nutprofilschiene 20 unmittelbar oberhalb des Armaturenbretts 16 angeordnet. Es versteht sich, dass die Nutprofilschiene 20 auch im Dachbereich des Fahrerschutzdaches 10 im Bereich der oberen Enden der vertikalen Fahrerschutzdachstreben 10a, 10b angeordnet sein kann.

Im Ausführungsbeispiel der Figuren 2 bis 4 ist die Nutprofilschiene 20 durch die Befestigung an den beiden Fahrerschutzdachstreben 10a, 10b somit als horizontale, in Fahrzeugquerrichtung verlaufende Querstrebe des Fahrerschutzdaches 10 ausgebildet.

Die Komponente 30, die mittels eines in der Nut 21a angeordneten Befestigungsmittels, beispielsweise eines Nutensteins, an der Nutprofilschiene 20 befestigt ist, ist im dargestellten Ausführungsbeispiel als Halter 32 ausgebildet, an dem ein Display oder eine Anzeige- und Bedieneinheit oder ein Terminal oder ein Mobiltelefon befestigt werden kann. Die Komponente 31, die mittels eines in der Nut 21a angeordneten Befestigungsmittels, beispielsweise eines Nutensteins, an der Nutprofilschiene 20 befestigt ist, ist im dargestellten Ausführungsbeispiel als Ablagefach 33 oder als Becherhalter 34 oder als Getränkehalter 35 oder als Aschenbecher 36 ausgebildet. Es versteht sich, dass mittels entsprechender Befestigungsmittel, beispielsweise entsprechender Nutensteine, die in der Nut 21a oder 21b angeordnet sind, weitere Komponenten an der Nutprofilschiene 20 befestigt werden können, beispielsweise eine Leselampe.

Es versteht sich, dass an der Nutprofilschiene 20 auch über entsprechende in die Nuten 21a bzw. 21b angeordnete Befestigungsmittel, beispielsweise Nutensteine, eine Innenraumverkleidung des Fahrerarbeitsplatzes F befestigt werden.

Zudem kann an der Nutprofilschiene 20 eine Scheibe 40, beispielsweise eine Frontscheibe, des Fahrerschutzdaches 10 befestigt werden. Beispielsweise über entsprechende in die Nuten 21a bzw. 21b angeordnete Befestigungsmittel, beispielsweise Nutensteine, oder indem die Scheibe 40 direkt in eine Nut 21a, 21b hinein gesteckt wird.

Es versteht sich weiterhin, dass die Nutprofilschiene 20 als einziger Komponententräger im Fahrerarbeitsplatz F ausgebildet sein kann, an dem auch die am Armaturenbrett 16 angeordneten Komponenten, beispielsweise ein Ablagefach 50 und Düsen 51 einer Lüftungs- und Heizungseinrichtung des Fahrerarbeitsplatzes F, befestigt werden können, so dass ein eigenes Armaturenbrett 16 entfallen kann.

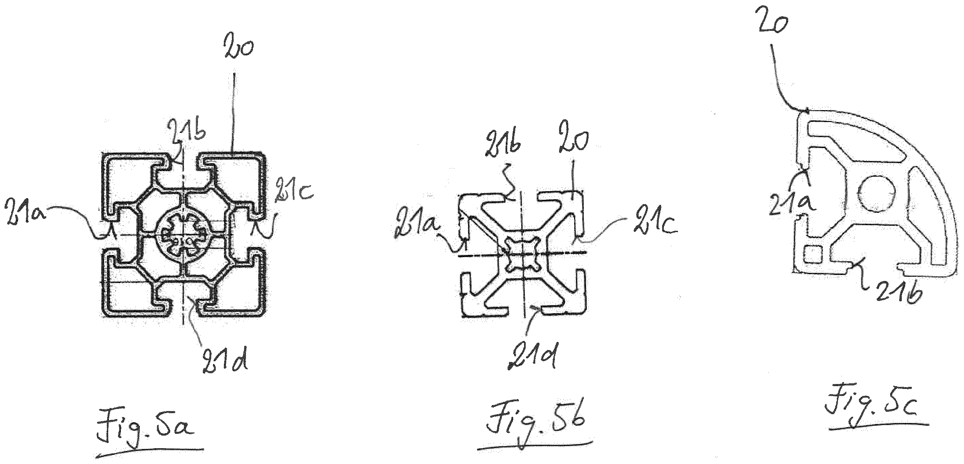

In den Figuren 5a bis 5c sind Querschnitte verschiedener Nutprofilschienen 20 dargestellt, die bei einem erfindungsgemäßen Flurförderzug 1 zur Befestigung von Komponenten 30, 31 eingesetzt werden können. Die Nutprofilschienen 20 der Figuren 5a, 5b weisen einen viereckigen Querschnitt auf und weisen an jeder der vier Außenseiten jeweils eine Nut 21a, 21b, 21c, 21d auf, in die Befestigungsmittel, beispielswiese Nutensteine, zur Befestigung von Komponenten eingefädelt werden können. Die Nutprofilschiene 20 der Figur 5c weist einen im Wesentlichen dreieckförmigen Querschnitt mit zwei geraden Seiten und einer abgerundeten Seite auf, wobei die beiden geraden Seiten jeweils mit einer Nut 21a, 21b versehen sind, in die Befestigungsmittel, beispielsweise Nutensteine, zur Befestigung von Komponenten eingefädelt werden können.

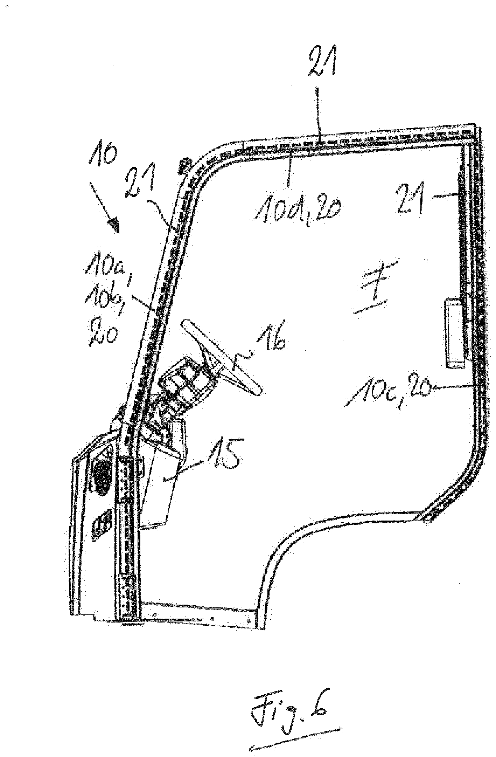

In der Figur 6 ist eine Weiterbildung der Erfindung dargestellt, gemäß der das Fahrerschutzdach 10 teilweise oder vollständig aus Nutprofilschienen 20 gebildet ist. In dem Ausführungsbeispiel der Figur 6 sind die vertikalen vorderen Fahrerschutzdachstreben 10a, 10b, die vertikale hinteren Fahrerschutzdachstreben 10c, sowie die horizontal verlaufenden Längsstreben 10d jeweils aus Nutprofilschienen 20 mit mindestens einer Nut 21 gebildet. Zusätzlich können horizontale Querstreben, die rechte und linke Fahrerschutzdachstreben 10a, 10b verbinden, aus Nutprofilschienen 20 mit mindestens einer Nut 21 gebildet sein.

Die Erfindung weist eine Reihe von Vorteilen auf:
Die Nutprofilschiene 20 bildet eine standardisierte Schnittstelle, an der über beispielsweise als Nutensteine ausgebildete Befestigungsmittel, die in die Nuten 21a, 21b, 21c, 21d der Nutprofilschiene 20 eingefädelt werden können, die unterschiedlichsten Komponenten 30, 31 angebaut werden können. Die entsprechenden Komponenten 30, 31 können entlang der jeweiligen Nut 21a-21d individuell entsprechend des Wunsches der Bedienperson im Fahrerarbeitsplatz F angeordnet und positioniert werden.

Die Befestigung von entsprechenden Komponenten 30, 31 in den Nuten 21a-21d der Nutprofilschiene 20 mittels entsprechenden Befestigungsmitteln, beispielsweise Nutensteinen, ermöglicht eine einfache Befestigung und Fixierung der entsprechenden Komponenten 30, 31 sowie eine individuelle Einstellbarkeit und individuelle Anordnung der Komponenten 30, 31 an den Wunsch der Bedienperson, so dass die Nutprofilschiene 20 der Bedienperson eine individuell gestaltbare Anordnung der Komponenten 30, 31 im Fahrerarbeitsplatz F ermöglicht. Zudem ermöglicht die Nutprofilschiene 20 eine ergonomisch günstige Anordnung der Komponenten für die jeweilige Bedienperson. Die Nutprofilschiene 20 ermöglicht weiterhin eine hohe Flexibilität und einen hohen Gestaltungsfreiraum hinsichtlich der Anordnung der Komponenten 30, 31. Zudem ermöglicht die Nutprofilschiene 20 eine einfache Umsetzung von Kundenwünschen. Weiterhin ermöglicht die Nutprofilschiene 20 einen einfachen Austausch von defekten Komponenten 30, 31 sowie eine einfache Umrüstung und Nachrüstung von Komponenten 30, 31.

## Patentansprüche

1. Flurförderzeug (1) mit einem Fahrerschutzdach (10) und einem innerhalb des Fahrerschutzdaches (10) angeordneten Fahrerarbeitsplatz (F) für eine Bedienperson des Flurförderzeugs (1) und mindestens einer im Fahrerarbeitsplatz (F) angeordneten Komponente (30, 31), wobei im Frontbereich des Fahrerarbeitsplatzes (F) eine Nutprofilschiene (20) angeordnet ist, die mit zumindest einer Nut (21a; 21b; 21c; 21d) versehen ist, wobei die Komponente (30, 31) mittels eines in die Nut (21a; 21b; 21c; 21d) eingesetzten Befestigungsmittels, insbesondere eines Nutensteins oder Einrastclips oder Rasthakens, an der Nutprofilschiene (20) befestigt ist, **dadurch gekennzeichnet, dass** das Flurförderzeug (1) als Schlepper oder als Plattformwagen ausgebildet ist und die Nutprofilschiene (20) im Wesentlichen horizontal angeordnet ist und sich über die gesamte Breite des Fahrerschutzdaches (10) erstreckt.

2. Flurförderzeug nach Anspruch 1, **dadurch gekennzeichnet, dass** die Nutprofilschiene (20) zwischen einer linken vertikalen Fahrerschutzdachstrebe (10a) und einer rechten vertikalen Fahrerschutzdachstrebe (10b) angeordnet ist.

3. Flurförderzeug nach Anspruch 2, **dadurch gekennzeichnet, dass** die Nutprofilschiene (20) an der linken vertikalen Fahrerschutzdachstrebe (10a) und an der rechten vertikalen Fahrerschutzdachstrebe (10b) befestigt ist.

4. Flurförderzeug nach einem der Ansprüche 1 bis 3, **dadurch gekennzeichnet, dass** die Nutprofilschiene (20) als Querstrebe des Fahrerschutzdaches (10) ausgebildet ist.

5. Flurförderzeug nach einem der Ansprüche 1 bis 4, **dadurch gekennzeichnet, dass** die Nutprofilschiene (20) unmittelbar oberhalb eines Armaturenbretts (16) angeordnet ist oder als Bestandteil des Armaturenbretts (16) ausgebildet ist.

6. Flurförderzeug nach einem der Ansprüche 1 bis 4, **dadurch gekennzeichnet, dass** die Nutprofilschiene (20) im Dachbereich des Fahrerschutzdaches (10) angeordnet ist.

7. Flurförderzeug nach einem der Ansprüche 1 bis 6, **dadurch gekennzeichnet, dass** das Fahrerschutzdach (10) zumindest teilweise aus Nutprofilschienen (20) gebildet ist.

8. Flurförderzeug nach einem der Ansprüche 1 bis 7, **dadurch gekennzeichnet, dass** die Nutprofilschiene (20) an zumindest zwei Außenseiten jeweils eine Nut (21a; 21b; 21c; 21d) aufweist.

9. Flurförderzeug nach einem der Ansprüche 1 bis 8, **dadurch gekennzeichnet, dass** die Komponente (30; 31) von einem Halter (32) eines Displays oder einem Halter (32) einer Anzeige- und Bedieneinheit oder einem Halter (32) eines Terminals oder einem Mobiltelefonhalter (32) oder einem Werkzeughalter oder einem Ablagefach (33) oder einer Leselampe oder einer Beleuchtungseinrichtung des Flurförderzeugs oder einem Haltegriff oder einem Becherhalter (34) oder einem Getränkehalter (35) oder einem Aschenbecher (36) oder einem Spiegel oder einer Sonnenblende gebildet ist.

10. Flurförderzeug nach einem der Ansprüche 1 bis 9, **dadurch gekennzeichnet, dass** an der Nutprofilschiene (20) eine Innenraumverkleidung des Fahrerarbeitsplatzes (F) befestigt ist.

11. Flurförderzeug nach einem der Ansprüche 1 bis 10, **dadurch gekennzeichnet, dass** an der Nutprofilschiene (20) eine Scheibe (40) des Fahrerschutzdaches (10) befestigt ist.

## Claims

1. Industrial truck (1) having a driver's protective roof (10), and a driver's workstation (F), arranged within the driver's protective roof (10), for an operator of the industrial truck (1), and at least one component (30, 31) arranged in the driver's workstation (F), wherein, in the front region of the driver's workstation (F), a slotted profile rail (20) is arranged, which is provided with at least one slot (21a; 21b; 21c; 21d), wherein the component (30, 31) is fastened to the slotted profile rail (20) by means of a fastening means inserted into the slot (21a; 21b; 21c; 21d), in particular a slot nut or snap-fitting clip or latching hook, **characterized in that** the industrial truck (1) is configured as a tractor or of a platform truck and the slotted profile rail (20) is arranged substantially horizontally and extends across the entire width of the driver's protective roof (10).

2. Industrial truck according to Claim 1, **characterized in that** the slotted profile rail (20) is arranged between a left-hand vertical driver's protective roof strut (10a) and a right-hand vertical driver's protective roof strut (10b).

3. Industrial truck according to Claim 2, **characterized in that** the slotted profile rail (20) is fastened to the left-hand vertical driver's protective roof strut (10a) and to the right-hand vertical driver's protective roof strut (10b).

4. Industrial truck according to one of Claims 1 to 3, **characterized in that** the slotted profile rail (20) is configured as a cross strut of the driver's protective roof (10).

5. Industrial truck according to one of Claims 1 to 4, **characterized in that** the slotted profile rail (20) is arranged directly above a dashboard (16) or is configured as a component part of the dashboard (16) .

6. Industrial truck according to one of Claims 1 to 4, **characterized in that** the slotted profile rail (20) is arranged in the roof region of the driver's protective roof (10).

7. Industrial truck according to one of Claims 1 to 6, **characterized in that** the driver's protective roof (10) is formed at least partially from slotted profile rails (20).

8. Industrial truck according to one of Claims 1 to 7, **characterized in that** the slotted profile rail (20) has respective slots (21a; 21b; 21c; 21d) on at least two outer sides.

9. Industrial truck according to one of Claims 1 to 8, **characterized in that** the component (30; 31) is formed by a holder (32) of a display or by a holder (32) of a display and control unit or by a holder (32) of a terminal or by a mobile telephone holder (32) or by a tool holder or by a storage compartment (33) or by a reading lamp or by an illumination device of the industrial truck or by a handle or by a cup holder (34) or by a drinks holder (35) or by an ashtray (36) o by a mirror or by a sun visor.

10. Industrial truck according to one of Claims 1 to 9, **characterized in that** an interior trim of the driver's workstation (F) is fastened to the slotted profile rail (20).

11. Industrial truck according to one of Claims 1 to 10, **characterized in that** a pane (40) of the driver's protective roof (10) is fastened to the slotted profile rail (20).

## Revendications

1. Chariot de manutention (1) avec un toit de protection du conducteur (10) et un poste de travail du conducteur (F) agencé à l'intérieur du toit de protection du conducteur (10) pour un opérateur du chariot de manutention (1) et au moins un composant (30, 31) agencé dans le poste de travail du conducteur (F), un rail profilé rainuré (20) étant agencé dans la zone frontale du poste de travail du conducteur (F), lequel est pourvu d'au moins une rainure (21a ; 21b ; 21c ; 21d), le composant (30, 31) étant fixé au moyen d'un moyen de fixation inséré dans la rainure (21a ; 21b ; 21c ; 21d), notamment d'un coulisseau ou d'un clip d'encliquetage ou d'un crochet d'encliquetage, au rail profilé rainuré (20), **caractérisé en ce que** le chariot de manutention (1) est réalisé sous forme de tracteur ou sous forme de chariot à plate-forme et le rail profilé rainuré (20) est agencé essentiellement horizontalement et s'étend sur toute la largeur du toit de protection du conducteur (10) .

2. Chariot de manutention selon la revendication 1, **caractérisé en ce que** le rail profilé rainuré (20) est agencé entre une entretoise de toit de protection du conducteur verticale gauche (10a) et une entretoise de toit de protection du conducteur verticale droite (10b).

3. Chariot de manutention selon la revendication 2, **caractérisé en ce que** le rail profilé rainuré (20) est fixé à l'entretoise de toit de protection du conducteur verticale gauche (10a) et à l'entretoise de toit de protection du conducteur verticale droite (10b).

4. Chariot de manutention selon l'une quelconque des revendications 1 à 3, **caractérisé en ce que** le rail profilé rainuré (20) est réalisé sous forme de traverse du toit de protection du conducteur (10).

5. Chariot de manutention selon l'une quelconque des revendications 1 à 4, **caractérisé en ce que** le rail profilé rainuré (20) est agencé directement au-dessus d'un tableau de bord (16) ou est réalisé sous forme de constituant du tableau de bord (16).

6. Chariot de manutention selon l'une quelconque des revendications 1 à 4, **caractérisé en ce que** le rail profilé rainuré (20) est agencé dans la zone de toit du toit de protection du conducteur (10).

7. Chariot de manutention selon l'une quelconque des revendications 1 à 6, **caractérisé en ce que** le toit de protection du conducteur (10) est formé au moins partiellement à partir de rails profilés rainurés (20).

8. Chariot de manutention selon l'une quelconque des revendications 1 à 7, **caractérisé en ce que** le rail profilé rainuré (20) présente respectivement une rainure (21a ; 21b ; 21c ; 21d) sur au moins deux côtés extérieurs.

9. Chariot de manutention selon l'une quelconque des revendications 1 à 8, **caractérisé en ce que** le composant (30 ; 31) est formé par un support (32) d'un écran ou un support (32) d'une unité d'affichage et de commande ou un support (32) d'un terminal ou un support de téléphone mobile (32) ou un support d'outil ou un compartiment de rangement (33) ou une lampe de lecture ou un appareil d'éclairage du chariot de manutention ou une poignée de maintien ou un support de gobelet (34) ou un support de boisson (35) ou un cendrier (36) ou un miroir ou un pare-soleil.

10. Chariot de manutention selon l'une quelconque des revendications 1 à 9, **caractérisé en ce qu'**un revêtement intérieur du poste de travail du conducteur (F) est fixé au rail profilé rainuré (20).

11. Chariot de manutention selon l'une quelconque des revendications 1 à 10, **caractérisé en ce qu'**une vitre (40) du toit de protection du conducteur (10) est fixée au rail profilé rainuré (20).
